# EUROPÄISCHE PATENTSCHRIFT

(11) **EP 1 599 344 B1**
(45) Veröffentlichungstag und Bekanntmachung des Hinweises auf die Patenterteilung: **11.05.2011**
(21) Anmeldenummer: 04713873.0
(22) Anmeldetag: 24.02.2004
(51) Int. Cl.: B42D 15/00, B42D 15/10

(54) **SICHERHEITSELEMENT**
SAFETY ELEMENT
ELEMENT DE SECURITE

(30) Priorität: 26.02.2003 DE 10308305
(43) Veröffentlichungstag der Anmeldung: 30.11.2005
(73) Patentinhaber: Giesecke & Devrient GmbH, 81677 München (DE)
(72) Erfinder: KAULE, Wittich, 82275 Emmering (DE); DICHTL, Marius, 81371 München (DE)
(74) Vertreter: Klunker . Schmitt-Nilson . Hirsch
(86) Internationale Anmeldenummer: PCT/EP2004/001815
(87) Internationale Veröffentlichungsnummer: WO 2004/076197

(56) Entgegenhaltungen:
- EP-A- 0 766 103
- WO-A-99/59036
- US-A- 5 101 184
- US-A- 5 428 479
- RAI-CHOUDHURY P ED - RAI-CHOUDHURY P (ED): "Microlithography, Micromachining and Microfabrication" HANDBOOK OF MICROLITHOGRAPHY, MICROMACHINING, AND MICROFABRICATION. VOL. 1: MICROLITHOGRAPY, BELLIGHAM, SPIE, US, Bd. VOL. 1, 1997, Seiten 1-16, XP002251881 ISBN: 0-8194-2378-5

## Beschreibung

Die Erfindung betrifft ein Sicherheitselement zur Absicherung von Wertgegenständen, das wenigstens einen ersten Teilbereich aufweist, in dem ein Nullte-Ordnung-Gitterbild angeordnet ist, das in einem bestimmten Spektralbereich beobachtbar ist. Die Erfindung betrifft ferner eine Gitterstruktur zur Absicherung von Wertgegenständen, die wenigstens ein erstes Gitterelement mit einer Gitterkonstante aufweist, die kleiner ist als die Wellenlänge, bei welcher der Gitterbereich betrachtet wird, wobei die Gitterstruktur in diesem Gitterelement in Form einer Reliefstruktur mit einer definierten Reliefhöhe vorliegt, so dass bei Betrachtung in einem bestimmten Spektralbereich ein Nullte-Ordnung-Gitterbild beobachtbar ist. Ferner betrifft die Erfindung ein Transfermaterial, ein Sicherheitspapier sowie ein Sicherheitsdokument mit dem oben genannten Sicherheitselement bzw. der oben genannten Gitterstruktur.

Optisch variable Elemente, wie Hologramme oder Beugungsgitterbilder, werden aufgrund ihrer mit dem Betrachtungswinkel variierenden optischen Eigenschaften häufig als Fälschungs- bzw. Kopierschutz für Wertdokumente, wie Kreditkarten, Banknoten oder dergleichen, aber auch zur Produktsicherung beliebiger Produkte bzw. Produktverpackungen verwendet.

Die Beugungsgitterbilder können in der Praxis in so genannte Nullte-Ordnung-Gitterbilder und Erste-Ordnung-Gitterbilder unterteilt werden. Die Erste-Ordnung-Gitterbilder haben Gitterkonstanten, die größer sind als die Wellenlänge, bei welcher das Erste-Ordnung-Gitterbild betrachtet werden soll. Da die Gitterbilder in aller Regel im visuellen Spektralbereich betrachtet werden, liegen die Gitterkonstanten hierbei in der Größenordnung von 1 µm. Bei diesen Beugungsgittern entspricht die nullte Ordnung dem klassischen reflektierten Strahl. D.h., bei Betrachtung des Beugungsgitters mit weißem Licht sind in der nullten Ordnung keine scharfen Informationen zu erkennen, da alle Wellenlängen reflektiert werden und sich überlagern. Die Aufnahmegeometrie für die Erste-Ordnung-Gitterbilder wird daher so gewählt, dass bei weitgehend senkrechter Betrachtung die erste Ordnung des Beugungsgitters erkannt wird. Die Farbvariabilität entsteht dabei durch die unterschiedliche Lage der ersten bzw. n-ten Beugungsordnungen für die einzelnen Wellenlängen. Der optische, als Echtheitsmerkmal genutzte Effekt beruht bei Erste-Ordnung-Gitterbildern somit in erster Linie auf der Gitterkonstanten, während das Gitterprofil bzw. die Tiefe des Gitterprofils unwesentlich sind. Diese Parameter beeinflussen lediglich die Intensität.

Im Gegensatz hierzu ist für den optischen Effekt von Nullte-Ordnung-Gitterbildern gerade das Gitterprofil bzw. die Tiefe des Profils ausschlaggebend für die Farbvariabilität. Denn bei Nullte-Ordnung-Gitterbildern liegt die Gitterkonstante vorzugsweise unterhalb des visuellen Spektralbereichs. Üblicherweise wird sie kleiner 400 nm gewählt. Wie bereits erwähnt, gibt es innerhalb der nullten Ordnung keine Farbvariabilität aufgrund der unterschiedlichen Lage der Beugungsmaxima. Die Farbvariabilität entsteht vielmehr durch einen zusätzlichen Interferenzeffekt, der als Interferenz "dünner Plättchen" bekannt ist. Hierbei ist die Tiefe des Beugungsstrukturreliefs ausschlaggebend, da aufgrund des Gangunterschiedes der an den unterschiedlichen Oberflächen des Reliefs reflektierten Lichtstrahlen für einzelne Wellenlängen destruktive Interferenz auftritt. Diese Wellenlängen fehlen damit im reflektierten Strahl der nullten Ordnung, so dass für das Auge die Mischfarbe der übrigen reflektierten Lichtwellenlängen sichtbar ist. Dieser Effekt wird umso deutlicher, wenn die Reliefstruktur der Beugungsstrukturen in ein dielektrisches Material mit einem großen Brechungsindex, beispielsweise n = 2, eingebracht wird, und diese Reliefstruktur in ein Kunststoffmaterial mit niedrigem Brechungsindex, beispielsweise n = 1,5, eingebettet wird. Mit diesen Nullte-Ordnung-Gitterbildern können farbige Flachen erzeugt werden, die beim Drehen innerhalb der Ebene des Dokuments um 90° oder beim Kippen des Dokuments einen ausgeprägten Farbumschlag zeigen. Die bekannten Nullter-Ordnung-Gitterbilder sind allerdings großflächig und bestehen aus sehr einfachen geometrischen Mustern, die relativ einfach drucktechnisch zu imitieren sind.

Aus der WO 99/59036 ist eine holographische Sicherheitseinrichtung mit einer ersten und zweiten ein holographisches Bild erzeugenden Mikrostruktur bekannt. Die Sicherheitseinrichtung erzeugt zwei oder mehr holographische Bilder, die unter unterschiedlichen Betrachtungswinkeln gesehen werden können.

Ferner ist aus der US 5,428,479 ein Sicherheitselement bekannt, das eine Beugungsgittervorrichtung mit einem eine Vielzahl von Pixeln aufweisenden Beugungsgitter umfasst. Jeder Pixel ist ein individuelles optisches Beugungsgitter, wobei die Beugungsgittervorrichtung ein optisch variables Bild erzeugt.

Der Erfindung liegt die Aufgabe zugrunde, den Fälschungsschutz von Nullte-Ordnung-Gitterbildern zu erhöhen.

Diese Aufgabe wird durch die Merkmale der unabhängigen Ansprüche gelöst. Weiterbildungen sind Gegenstand der Unteransprüche.

Das erfindungsgemäße Sicherheitselement zeichnet sich dadurch aus, dass es wenigstens einen Teilbereich aufweist, in dem ein Nullte-Ordnung-Gitterbild angeordnet ist, das in einem bestimmten Spektralbereich, vorzugsweise im sichtbaren Spektralbereich, beobachtbar ist, und wenigstens einen zweiten Teilbereiche in dem ein weiteres Echtheitsmerkmal angeordnet ist. Bei diesem Echtheitsmerkmal handelt es sich um ein optisch variables oder gerichtet reflektierendes Teilelement, wie beispielsweise Erste-Ordnung-Gitterbilder, Flüssigkristallschichten, Multilayer-Dünnschicht-Elemente oder Druckbilder, die mit einer Druckfarbe erstellt werden, die optisch variable Bestandteile enthält.

Unter Erste-Ordnung-Gitterbilder sind beliebige Beugungsstrukturen zu verstehen, deren Farbvariabilität, wie bereits eingangs erläutert, von der Gitterkostante abhängt. Dies können echte Hologramme, aber auch beliebige Gitterbilder, wie Kinegramme®, Pixelgramme etc., sein.

Unter Multilayer-Dünnschicht-Elementen sind beliebige Schichtsysteme zu verstehen, die aufgrund ihrer Schichtfolge und Schichtdicke konstruktive oder destruktive Interferenz der einfallenden Strahlung erzeugen, so dass ebenfalls eine winkelabhängige optische Variabilität auftritt.

Bei den optisch variablen Bestandteilen der Druckfarbe handelt es sich vorzugsweise um flüssigkristalline oder auf Dünnschichteffekten beruhende Bestandteile, wie beispielsweise Iriodine®.

Falls im Sinne der Erfindung Teilbereiche mit gerichteter Reflexion ausgestattet werden sollen, kann dies durch vollflächige oder partielle Metallisierung oder durch Aufbringen sonstiger reflektierender Schichten geschehen. Die Metallisierung kann dabei als Raster oder als partielle Metallisierung in Form eines Zeichens, Musters oder dergleichen vorliegen. Auch eine Negativdarstellung dieser Zeichen oder Muster ist möglich, d.h. die Zeichen oder Muster liegen in Form von Aussparungen in einer ansonsten vollflächigen bzw. gerasterten Metallisierung vor. Auch einfache vollflächige Metallisierungen sind möglich.

Der erste und/oder zweite Teilbereich des erfindungsgemäßen Sicherheitselements sollen über- oder nebeneinander wirksam sein und stellen vorzugsweise eine visuell erkennbare Information, wie ein Bildmotiv, ein Zeichen, Muster, Logo oder dergleichen, dar. Der erste und zweite Teilbereich können auch Teilansichten eines Gesamtbildes darstellen. Selbstverständlich kann das Sicherheitselement auch mehrere erste und/oder zweite Teilbereiche, d.h. mehrere Nullte-Ordnung-Gitterbilder und/oder Echtheitsmerkmale aufweisen.

Vorzugsweise ist das Nullte-Ordnung-Gitterbild im sichtbaren Spektralbereich beobachtbar, d.h es weist eine Gitterkonstante kleiner 500 nm, vorzugsweise kleiner 400 nm bzw. im Bereich von ca. 100 nm bis 500 nm auf. Die für die Funktion des Nullte-Ordnung-Gitterbildes entscheidende Profiltiefe liegt dabei vorzugsweise zwischen 50 und 300 nm und das Profil der Gitterstruktur selbst ist vorzugsweise kasten- oder trapezförmig, wobei auch sinoidale Profile denkbar sind. Die Gitterstruktur des Nullte-Ordnung-Gitterbildes wird vorzugsweise in ein Kunststoffmaterial eingebracht, das anschließend mit einem hoch brechenden Material, wie beispielsweise CaS, CrO₂, ZnS, TiO₂ oder SiOₓ beschichtet wird.

Das Nullte-Ordnung-Gitterbild kann auch vollständig in ein Kunststoffmaterial, wie PVC, PET, Polyester oder eine UV-härtbare Lackschicht eingebettet sein. Da Nullte-Ordnung-Gitterbilder in aller Regel transparent oder zumindest transluzent sind, kann es sinnvoll sein, das Nullte-Ordnung-Gitterbild mit einer zusätzlichen lichtabsorbierenden Hintergrundschicht zu versehen, um den optischen Effekt in Aufsicht zu verstärken.

Das erfindungsgemäße Sicherheitselement weist einen erhöhten Fälschungsschutz auf, da es nur mithilfe aufwändiger technischer Methoden herstellbar ist. Um eine optimale Qualität der einzelnen Echtheitsmerkmale zu erreichen, müssen insbesondere die unterschiedlichen Anforderungen an die verschiedenen Herstellungsverfahren miteinander kombiniert werden. Zudem müssen die Echtheitsmerkmale exakt zueinander positioniert werden.

Der Fälschungsschutz kann noch weiter erhöht werden, wenn das Nullte-Ordnung-Gitterbild und/oder das Echtheitsmerkmal wenigstens ein Bildelement enthält, das in seinem Umriss fein strukturiert ist. D.h. das Bildelement weist in wenigstens einer Richtung eine Ausdehnung kleiner 1 mm, insbesondere 0,5 mm, auf. Vorzugsweise liegt die Ausdehnung des Bildelements in wenigstens einer Richtung unterhalb des Auflösungsvermögens des Auges, vorzugsweise unterhalb 0,2 mm.

Gemäß einer bevorzugten Ausführungsform setzt sich das Nullte-Ordnung-Gitterbild und/ oder das Echtheitsmerkmal aus mehreren Bildelementen zusammen. Dabei können die Bildelemente unter einem bestimmten Betrachtungswinkel unterschiedliche Farben und/oder die Form eines Rasterelements, wie eines Punktes, Dreiecks, Linie, Zeichens etc., aufweisen. Das Nullte-Ordnung-Gitterbild und/ oder das Echtheitsmerkmal können auch eine Gruppe von Bildelementen aufweisen, die eine visuell erkennbare Information darstellen.

Beispielsweise kann das Nullte-Ordnung-Gitterbild und/oder das Echtheitsmerkmal eine Vielzahl von fein strukturierten Bildelementen in Form einer Linie aufweisen. Mithilfe dieser Linien kann ein beliebiges Linienmotiv erzeugt werden, das unter bestimmten Betrachtungsbedingungen in einer oder mehreren Farben erscheint. Es können auch mehrere Linienmotive miteinander kombiniert werden, deren Gitterparameter so gewählt sind, dass beim Drehen oder Kippen des Nullte-Ordnung-Gitterbildes die unterschiedlichen Linienmotive nacheinander aufleuchten. Damit können auch bewegte bzw. pulsierende Motive simuliert werden.

Die Herstellung der erfindungsgemäßen Nullte-Ordnung-Gitterbilder erfolgt dabei vorzugsweise mithilfe der Elektronenstrahl-Lithographie. Besonders vorteilhaft lassen sich hierbei die in der DE 102 26115.6 und DE 102 26112.1, auf welche hier ausdrücklich Bezug genommen wird, beschriebenen Verfahren anwenden. Alternativ können die Nullte-Ordnung-Gitterbilder auch durch klassische optische Belichtung hergestellt werden. Die erfindungsgemäßen Sicherheitselemente lassen sich schließlich durch geschickte Kombination beider Methoden mit anderen Techniken herstellen.

Gemäß einer bevorzugten Ausführungsform weist das Sicherheitselement neben dem Nullte-Ordnung-Gitterbild als weiteres Echtheitsmerkmal ein Erste-Ordnung-Gitterbild auf. Dieses Sicherheitselement hat den Vorteil, dass es unter beliebigen Beleuchtungsbedingungen betrachtet werden kann und immer wenigstens eines der Gitterbilder einen optimalen optischen Effekt zeigt. Während Erste-Ordnung-Gitterbilder nur unter indirekter Beleuchtung einen optimalen Effekt zeigen, können Nullte-Ordnung-Gitterbilder gerade auch unter diffusen Beleuchtungsbedingungen ihre optischen Eigenschaften optimal entfalten.

Die Gitterstruktur dieses Sicherheitselements, die sowohl die Gitterstruktur des Nullte-Ordnung-Gitterbildes als auch die Gitterstruktur des Erste-Ordnung-Gitterbildes umfasst, kann dabei in einer oder mehreren Photoresistschichten erzeugt werden. Der Begriff "Photoresist" bezeichnet dabei im Sinne der Erfindung ein strahlungsempfindliches Material, dessen chemische Eigenschaften, insbesondere dessen Löslichkeitsverhalten, sich durch Einwirkung von Licht- oder Teilchenstrahlung ändert.

Werden mehrere Photoresistschichten verwendet, so können diese neben- oder übereinander angeordnet werden. Ob eine oder mehrere Photoresistschichten verwendet werden, hängt unter anderem von den verwendeten Aufzeichnungsverfahren ab. Für die Herstellung des Nullte-Ordnung-Gitterbildes sowie des Erste-Ordnung-Gitterbildes können dabei grundsätzlich gleiche oder unterschiedliche Aufzeichnungsverfahren, wie Elektronenstrahl-Lithographie oder optische Belichtung, verwendet werden. Bei der Wahl des oder der Photoresistschichten und der weiteren Belichtungsparameter ist dabei zu beachten, dass Erste-Ordnung-Gitterstrukturen in aller Regel sinusförmige Profile mit flachen Flanken aufweisen, während Nullte-Ordnung-Gitterstrukturen vorzugsweise kastenförmige oder trapezförmige Profile benötigen.

Die erfindungsgemäßen Gitterstrukturen werden vorzugsweise in Form einer prägbaren Reliefstruktur auf Prägewerkzeugen vorbereitet, die anschließend in eine beliebige Schicht, wie beispielsweise eine thermoplastische Schicht oder eine Lackschicht, insbesondere eine UV-härtbare Lackschicht, eingeprägt werden. Die prägbare Schicht befindet sich vorzugsweise auf einem Trägermaterial, wie einer Kunststofffolie. Sofern das erfindungsgemäße Sicherheitselement ein Echtheitsmerkmal aufweist, das keine Gitterstruktur aufweist, wird dieses Echtheitsmerkmal ebenfalls auf dieser Kunststofffolie vorbereitet. Selbstverständlich kann das Sicherheitselement bzw. die Kunststofffolie weitere Sicherheitsmerkmale, wie Lumineszenzstoffe, magnetische oder elektrische Sicherheitsmerkmale, aufweisen.

Je nach Verwendungszweck kann das Sicherheitselement als Sicherheitsfaden oder Sicherheitsetikett ausgebildet sein. Der Schichtaufbau auf der Kunststofffolie wird an diese Anforderungen entsprechend angepasst. Alternativ kann die Kunststofffolie als Transfermaterial, wie beispielsweise als Heißprägefolie, ausgestaltet sein, die zum Übertrag einzelner erfindungsgemäßer Sicherheitselemente auf zu sichernden Gegenstände dient.

Die erfindungsgemäßen Sicherheitselemente werden dabei vorzugsweise zur Absicherung von Sicherheitspapieren und Sicherheitsdokumenten, wie beispielsweise Banknoten, Ausweiskarten, Pässen und dergleichen, benutzt. Selbstverständlich können sie auch für andere zu sichernde Waren, wie CD's, Bücher, Flaschen, Verpackungen aller Art, etc., eingesetzt werden.

Weitere Ausführungsformen und Vorteile der Erfindung werden anhand der Figuren erläutert.

Es zeigen:
- Fig.1: ein erfindungsgemäßes Sicherheitsdokument,
- Fig. 2: ein erfindungsgemäßes Sicherheitselement in Form eines Sicherheitsfadens im Querschnitt,
- Fig. 3: ein erfindungsgemäßes Transfermaterial im Querschnitt,
- Fig. 4: eine erfindungsgemäße Gitterstruktur in Aufsicht,
- Fig. 5: Vorlage für eine holographische Belichtung,
- Fig. 6: Beispiel für eine Maske,
- Fig. 7: Gitterstruktur nach einer holographischen Belichtung mit der Vorlage gemäß Fig. 5 und Maske gemäß Fig. 6,
- Fig. 8: weitere Ausführungsform einer erfindungsgemäßen Git- terstruktur,
- Fig. 9a bis 9c: Beispiel für ein Herstellungsverfahren der Gitterstruktur gemäß Fig. 8,
- Fig. 10: perspektivischer Ausschnitt aus der Gitterstruktur ge- mäß Fig. 8 im Bereich A,
- Fig.11: Beispiel eines erfindungsgemäßen Sicherheitselements in Form eines Sicherheitsfadens,
- Fig. 12a bis 12d: schematische Darstellung der Herstellungsschritte des Sicherheitsfadens gemäß Fig. 11,
- Fig. 13: weiteres Beispiel eines erfindungsgemäßen Sicherheits- elements in Form eines Sicherheitsfadens.

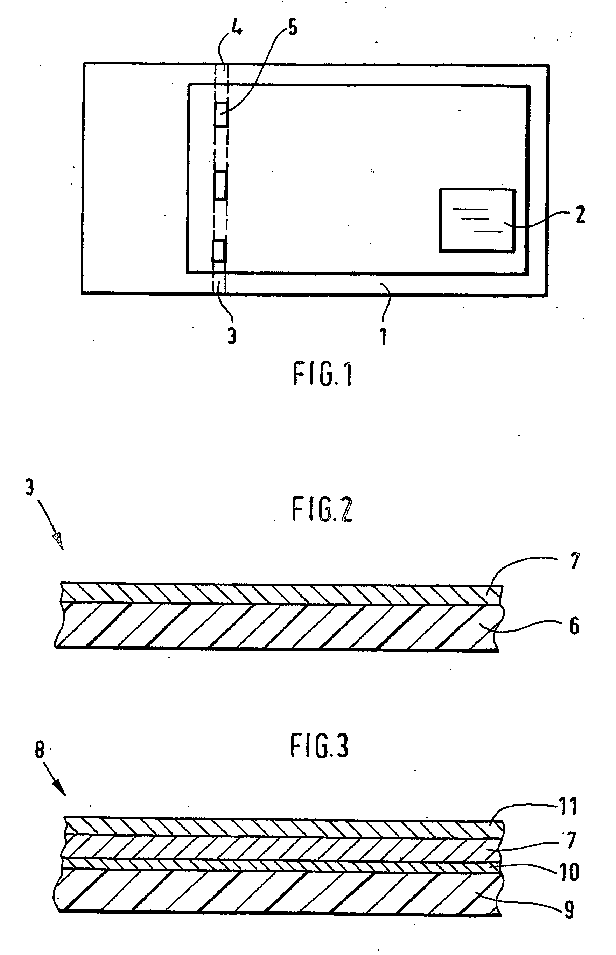

Fig.1 zeigt ein erfindungsgemäßes Sicherheitsdokument 1, hier eine Banknote, die ein erfindungsgemäßes Sicherheitselement 2 aufweist. Das Sicherheitselement 2 ist im gezeigten Beispiel in Form eines Patches auf die Banknote 1 aufgebracht. Selbstverständlich kann das Sicherheitselement 2 jede beliebige andere Form aufweisen. So kann es beispielsweise in Form eines Streifens, der über die gesamte Breite der Banknote verläuft, ausgebildet sein.

Alternativ kann das erfindungsgemäße Sicherheitselement auch in Form eines Sicherheitsfadens in das Sicherheitsdokument eingebracht sein. Das Sicherheitsdokument 1 in Fig. 1 weist ebenfalls einen derartigen Sicherheitsfaden 3 auf, der entweder als erfindungsgemäßes Sicherheitselement 2 ausgebildet sein kann oder beliebige andere Sicherheitsmerkmale aufweisen kann. Der Sicherheitsfaden 3 wird vorteilhafterweise in Form eines so genannten "Fenstersicherheitsfadens" in das Sicherheitspapier der Banknote 1 quasi eingewebt. Die im Sicherheitspapier liegenden Bereiche 4 des Sicherheitsfadens 3 sind strichliert angedeutet, während die Fensterbereiche 5 des Sicherheitsfadens 3 mit durchgezogenen Linien dargestellt sind.

Den prinzipiellen Schichtaufbau eines derartigen erfindungsgemäßen Sicherheitsfadens 3 zeigt Fig. 2. Er besteht im Wesentlichen aus einer Trägerschicht 6, vorzugsweise einer Kunststofffolie, auf welche der Schichtaufbau 7 des Sicherheitselements 2 aufgebracht ist. Der Sicherheitsfaden 3 kann selbstverständlich weitere Schichten oder Echtheits- bzw. Sicherheitsmerkmale, wie beispielsweise Lumineszenzstoffe, magnetische oder elektrisch leitfähige Merkmale, aufweisen. Diese sind jedoch in der Figur nicht dargestellt.

Ist das Sicherheitselement 2 dagegen in Form eines Patches oder Streifens auf den zu sichernden Gegenstand, wie hier die Banknote 1, aufgebracht, so wird es vorzugsweise in Form von Etikettenmaterial oder eines Transfermaterials vorbereitet, aus dem das Patch anschließend in der gewünschten Form ausgelöst und auf den zu sichernden Gegenstand übertragen wird.

Fig. 3 zeigt ein Beispiel für ein derartiges Transfermaterial 8. Das Transfermaterial 8 weist eine Trägerschicht 9, vorzugsweise eine Kunststofffolie auf, auf welche der Schichtaufbau 7 des Sicherheitselements 2 in lösbarer Form aufgebracht ist. Unter Umständen kann es notwendig sein, eine Trennschicht 10 zwischen dem Schichtaufbau 7 des Sicherheitselements 2 und der Trägerschicht 9 vorzusehen. Auf dem Schichtaufbau des Sicherheitselements 2 schließlich ist eine Kleberschicht 11 vorgesehen, mit welcher das Sicherheitselement 2 auf dem zu sichernden Gegenstand befestigt wird. Beim Übertrag wird das Transfermaterial 8 mit der Klebstoffschicht 11 auf den zu sichernden Gegenstand aufgelegt und das Sicherheitselement 2 in der gewünschten Form übertragen. Handelt es sich um eine Heißprägefolie, so wird eine Heißschmelzkleberschicht 11 verwendet, die in den zu übertragenden Bereichen durch Wärme aktiviert wird. Anschließend wird das Transfermaterial von dem zu sichernden Gegenstand entfernt und nur der Schichtaufbau 7 des Sicherheitselements 2 verbleibt auf dem Gegenstand.

Sofern das Sicherheitselement 2 in Form von Etikettenmaterial vorliegt, besitzt es prinzipiell den gleichen Aufbau wie das Transfermaterial 8. Es unterscheidet sich lediglich dadurch, dass es keine Trennschicht 10 aufweist, und der Schichtaufbau 7 des Sicherheitselements 2 unlösbar mit der Trägerschicht 9 verbunden ist. Das Etikettenmaterial kann jedoch auf der klebstoffbeschichteten Seite mit einer Folie abgedeckt sein, die unter Umständen ebenfalls eine Trennschicht, z.B. eine Silikonschicht, trägt.

Der Schichtaufbau 7 des Sicherheitselements kann in allen Ausführungsformen ein- oder mehrschichtig ausgeführt sein. So kann es sich beispielsweise lediglich um eine Lackschicht handeln, in der die Gitterstruktur in Form eines Reliefs vorliegt. Diese Schicht kann mit weiteren Schichten, wie reflektierenden Sichten aus Metall oder hoch brechendem Material, sowie weiteren Schichten kombiniert sein.

Selbstverständlich kann auch das Transfermaterial bzw. Etikettenmaterial weitere Schichten aufweisen, in denen beispielsweise weitere Sicherheitsmerkmale angeordnet sind.

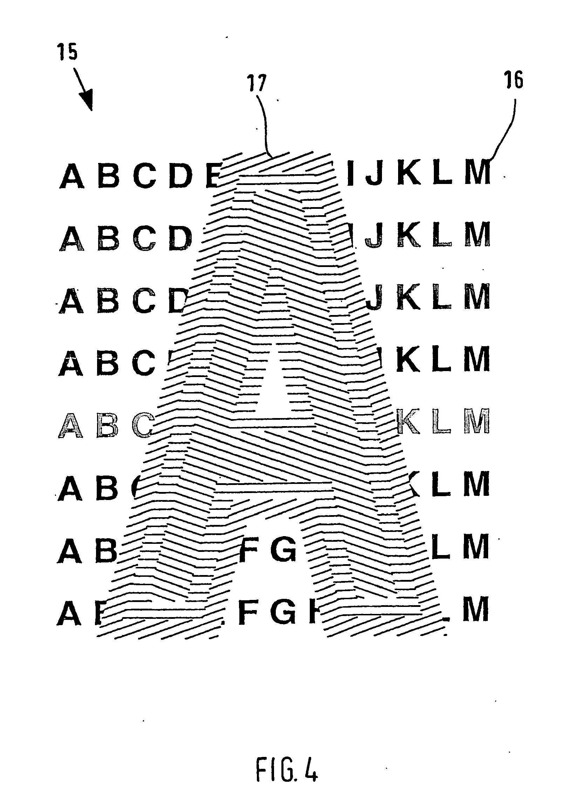

In Fig. 4 ist schematisch die Gitterstruktur 15 eines erfindungsgemäßen Sicherheitselements in Aufsicht dargestellt. Die Gitterstruktur 15 weist einen ersten Teilbereich 16 auf, in dem ein Erste-Ordnung-Gitterbild angeordnet ist, sowie einen zweiten Teilbereich 17, in welchem ein Nullte-Ordnung-Gitterbild angeordnet ist. Im gezeigten Beispiel handelt es sich bei der im Teilbereich 16 angeordneten Gitterstruktur um ein echtes Hologramm, das ein im Hintergrund angeordnetes Feld aus Buchstaben darstellt. Dieses holographisch, d.h. durch Überlagerung kohärenter Lichtstrahlen erzeugte Buchstabenfeld 16 ist im Bereich 17 unterbrochen bzw. weist dort eine Lücke 17 auf. In dieser Lücke 17 ist ein Nullte-Ordnung-Gitterbild in Form eines Buchstaben "A" angeordnet, der sich aus unterschiedlichen bandförmigen Gitterstrukturen zusammensetzt, was durch die unterschiedliche Schraffur schematisch dargestellt wird. Beim Kippen des Bildes scheint der Buchstabe "A" zu pulsieren. Das Nullte-Ordnung-Gitterbild kann dabei entweder mittels Elektronenstrahllithographie oder durch optische Belichtung hergestellt werden.

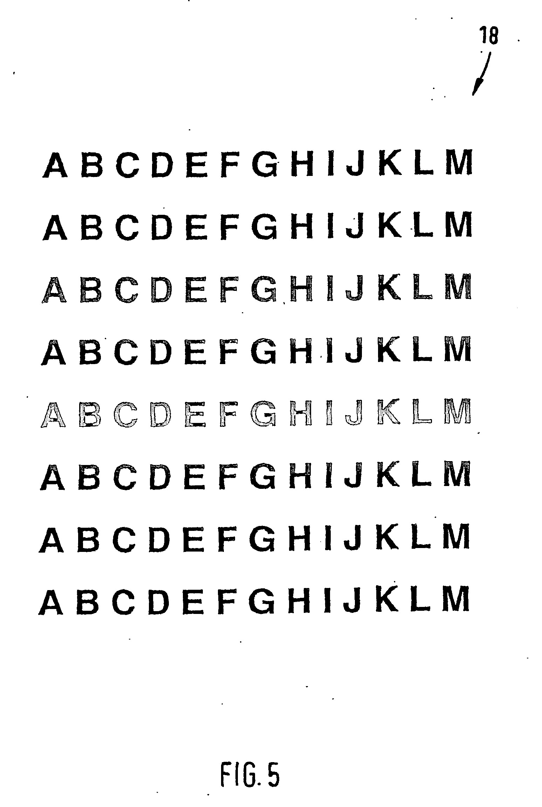

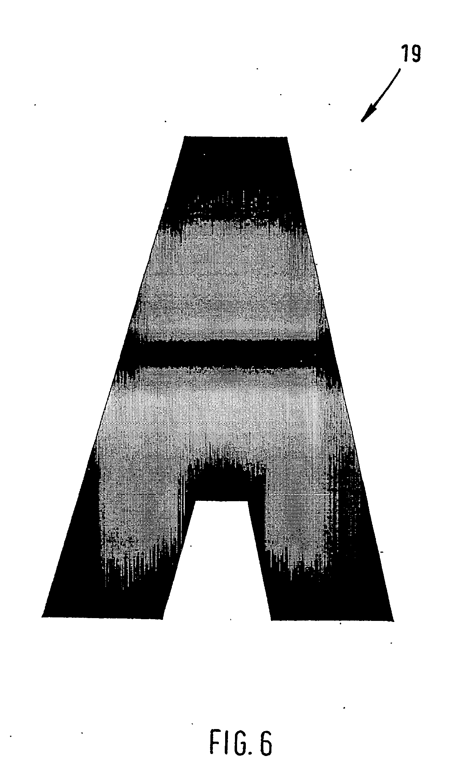

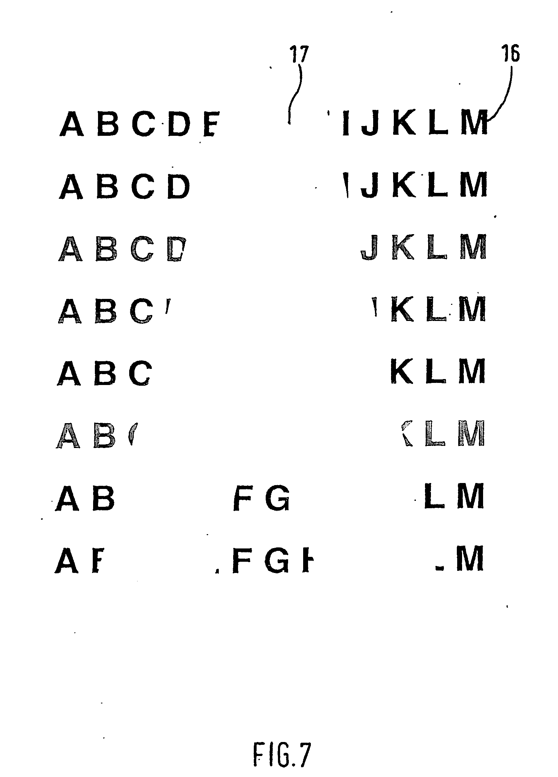

Für die Herstellung des holographischen Hintergrunds wird eine Vorlage 18 verwendet, wie sie in Fig. 5 dargestellt ist. Diese Vorlage 18 wird optisch in eine Photoresistschicht belichtet, wobei eine Maske 19 in Form des Buchstaben "A" verwendet wird. Die Maske 19 ist in Fig. 6 schematisch gezeigt. Die Maske 19 verhindert die holographische Belichtung der Photoresistschicht im Bereich 17 und lediglich der Hintergrund wird mit dem Buchstabenfeld 16 belichtet. Dies zeigt Fig. 7. In den ausgesparten, nicht belichteten Bereich 17 wird anschließend die in Fig. 4 dargestellte Gitterstruktur des Teilbereichs 17 eingebracht. Wie bereits erwähnt, entweder mithilfe eines Elektronenstrahls oder ebenfalls durch optische Belichtung. Die Reihenfolge der Belichtungsschritte kann selbstverständlich vertauscht werden. Für die Herstellung der Gitterstruktur 15 können auch mehrere Photoresistschichten verwendet werden.

Selbstverständlich können die Motive der dargestellten Gitterstruktur 15 beliebig gewählt werden Auch können die unterschiedlichen Teilbereiche 16,17 beliebig ineinander verschachtelt sein.

Das auf die oben beschriebene Weise belichtete Substrat, der so genannte "Resistmaster", wird anschließend galvanisch abgeformt und nach bekannten Verfahren vervielfältigt, um einen Prägestempel, wie beispielsweise einen Prägezylinder, herzustellen. Mittels dieses Prägestempels werden schließlich die erfindungsgemäßen Sicherheitselemente hergestellt, die zur Absicherung beliebiger Gegenstände benutzt werden können.

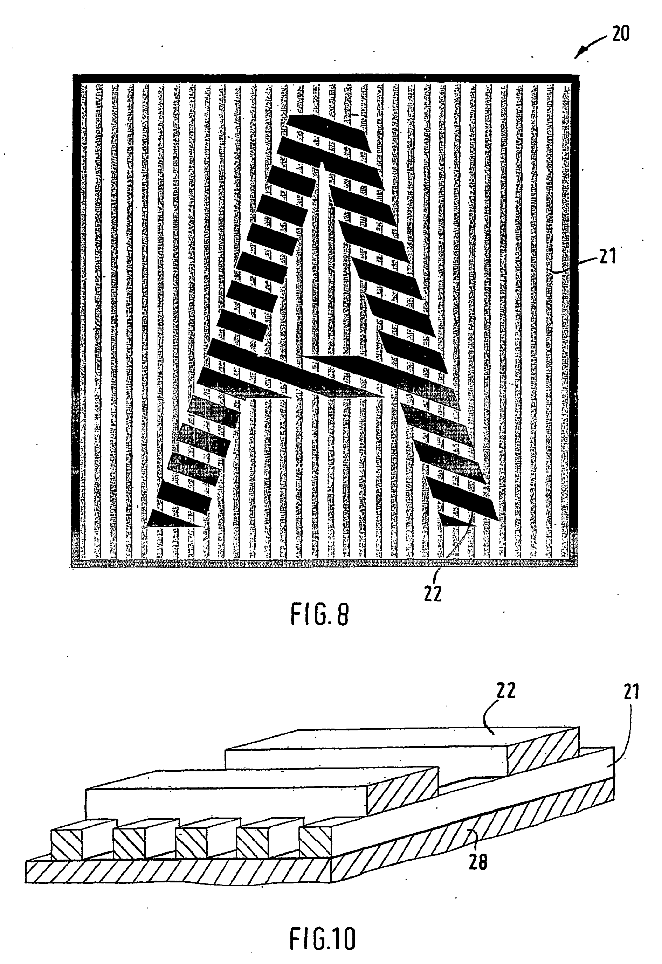

Fig. 8 zeigt eine weitere Ausführungsform einer erfindungsgemäßen Gitterstruktur 20 in Aufsicht, wie sie für erfindungsgemäße Sicherheitselemente verwendet werden kann. In diesem Beispiel bildet ein Nullte-Ordnung-Gitterbild 21 den Hintergrund, während im Vordergrund ein Erste-Ordnung-Gitterbild in Form eines Buchstabens "A" angeordnet ist. Im Gegensatz zu dem in Fig. 4 dargestellten Beispiel überlagern sich in dieser Ausführungsform gemäß Fig. 8 die beiden unterschiedlichen Gitterstruktu ren 21, 22.

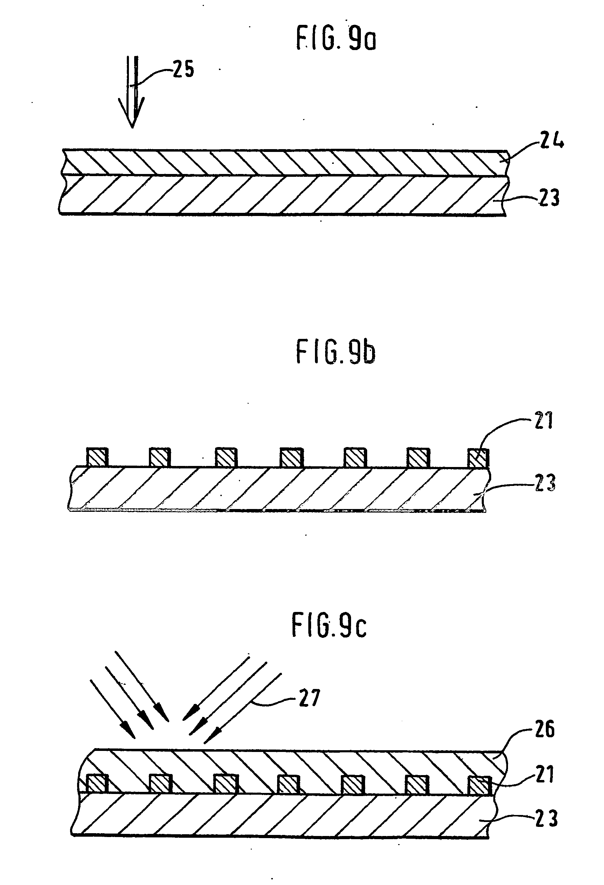

Fig. 9a bis 9c zeigen schematisch die grundsätzlichen Verfahrensschritte zur Herstellung einer derartigen Gitterstruktur 20. Wie in Fig. 9a dargestellt, wird ein Substrat 23 vollflächig mit einer Photoresistschicht 24 beschichtet. Diese Photoresistschicht 24 wird im vorliegenden Beispiel mithilfe eines Elektronenstrahls 25 mit dem Nullte-Ordnung-Gitterbild 21 beschrieben. Fig. 9b zeigt die Gitterstruktur des Nullte-Ordnung-Gitterbildes 21 nach der Entwicklung der Photoresistschicht 24. Wie in Fig. 9c dargestellt, wird das Nullte-Ordnung-Gitterbild 21 anschließend mit einer weiteren Photoresistschicht 26 beschichtet, wobei das Nullte-Ordnung-Gitterbild 21 vollständig aufgefüllt wird und eine planare Oberfläche entsteht. Die Schichtdicke des Gesamtschichtsystems sollte dabei so gewählt werden, dass sie dem eines typischen holographischen Gitters entspricht. In dieser zweiten Photoresistschicht 26 wird mittels optischer Überlagerung zweier kohärenter Lichtbündel 27 ein Erste-Ordnung-Gitterbild 22 in Form des Buchstabens "A" so eingebracht, dass sich die Gitterlinien des Nullte-Ordnung-Gitterbildes 21 und die des Erste-Ordnung-Gitterbildes 22 in einem nicht zu spitzen Winkel schneiden.

Auf diese Weise entsteht eine sandwichartige Struktur. Einen perspektivischen Ausschnitt aus dieser sandwichartigen Struktur der Gitterstruktur 20 zeigt Fig. 10. Auf einem Substrat 28, beispielsweise einer Glasplatte, sind die Gitterstrukturen 21, 22 rechtwinklig zueinander angeordnet. Dieses Substrat 28 mit den Gitterstrukturen 21, 22 bildet einen Resistmaster, der, wie bereits erläutert, galvanisch abgeformt und vervielfältigt werden kann, um Prägewerkzeuge herzustellen, die bei der Herstellung der Sicherheitselemente eingesetzt werden können.

Selbstverständlich kann in der zweiten Photoresistschicht 26 auch vollflächige ein Erste-Ordnung-Gitterbild erzeugt werden. Ebenso kann für die Erzeugung des Erste-Ordnung-Gitterbildes statt der optischen Belichtung ein Elektronenstrahl verwendet werden.

Nach geeigneter Beschichtung mit hoch brechenden Schichten bzw. Metallisierung entsteht eine Kombination eines beugenden substraktiven Farbfilters mit einem optischen Erste-Ordnung-Gitterbild. Die örtliche Passerung beider Gitterstrukturen zueinander lässt sich gegebenenfalls durch Einbringung und Benutzung geeigneter Markierungen erzielen.

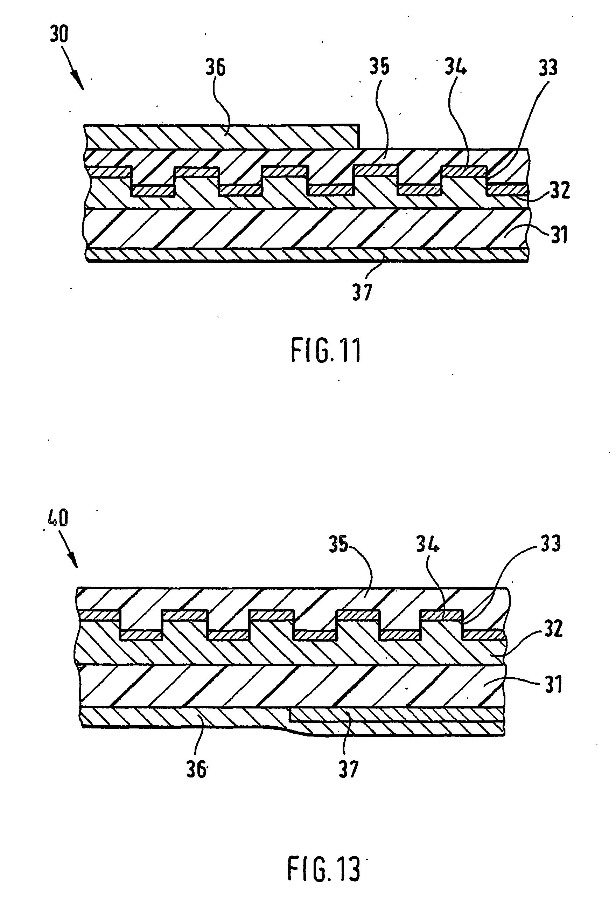

In Fig.11 ist ein erfindungsgemäßes Sicherheitselement in Form eines Sicherheitsfadens 30 dargestellt. Dieser Sicherheitsfaden 30 weist eine Trägerschicht 31, vorzugsweise eine Kunststofffolie, auf, auf welcher eine Prägeschicht 32 angeordnet ist. In diese Prägeschicht 32 ist die Gitterstruktur 33 eines Nullte-Ordnung-Gitterbildes eingeprägt. Über der Prägeschicht 32 befindet sich eine dünne, hoch brechende Schicht 34, wie beispielsweise eine Schicht aus CaS, CrO₂, ZnS, TiO₂ oder SiOₓ. Die Gitterstruktur 33 des Nullte-Ordnung-Gitterbildes wird schließlich mit einer weiteren Kunststoff- oder Kleberschicht 35 aufgefüllt, um eine planare Oberfläche zu erhalten. Auf dieser Kunststoff- oder Kleberschicht 35 wird schließlich das erfindungsgemäße Echtheitsmerkmal 36 angeordnet. Sofern das Echtheitsmerkmal 36 und die optischen Effekte der Gitterstruktur 33 gleichzeitig beobachtbar sein sollen, darf das Echtheitsmerkmal 36 lediglich partiell auf der Kunststoff- oder Kleberschicht 35 angeordnet sein.

Ein derart aufgebautes Sicherheitselement kann sowohl in Durchsicht als auch in Aufsicht betrachtet werden. Soll das Sicherheitselement 30 nur in Aufsicht verwendet werden, wird das Sicherheitselement 30 auf einer Seite vorzugsweise vollflächig mit einer weiteren Schicht versehen, die sichtbares Licht absorbiert. Vorzugsweise wird hierfür eine schwarze Schicht verwendet. Dadurch erhöht sich die Brillanz des optischen Effekts des Nullte-Ordnung-Gitterbildes.

Bei dem in Fig. 11 gezeigten Sicherheitsfaden 30 wird daher die Trägerschicht 31 auf der Unterseite mit dieser Licht absorbierenden Schicht vollflächig versehen.

Sofern als Echtheitsmerkmal 36 eine optisch variable Druckschicht verwendet wird, kann diese mittels entsprechender Druckverfahren aufgedruckt werden. Hierbei können beliebige Motive, auch fein strukturierte Motive erzeugt werden.

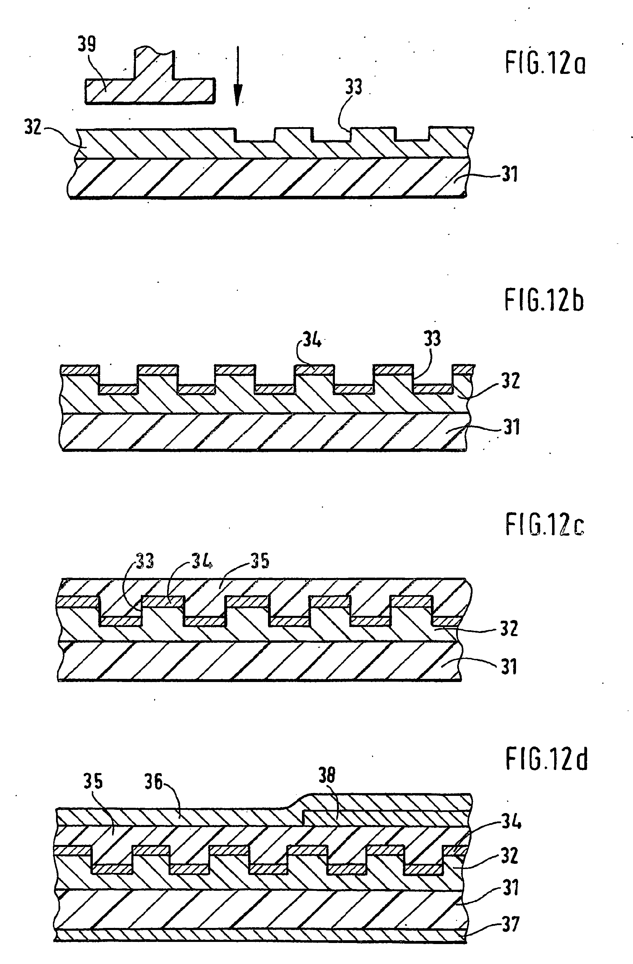

Wird als Echtheitsmerkmal 36 ein Erste-Qrdnung-Gitterbild oder ein Multilayer-Dünnschichtelement verwendet, so sind spezielle Maßnahmen notwendig, um derartige Echtheitsmerkmale partiell auf der Kunststoffschicht 35 erzeugen zu können. Im Folgenden wird daher anhand der Fig. 12a bis 12d die Herstellung eines erfindungsgemäßen Sicherheitsfadens 30, der sowohl eines der oben genannten Echtheitsmerkmale als auch ein Nullte-Ordnung-Gitterbild aufweist, in Bezug auf die wesentlichen Verfahrensschritte näher erläutert.

Wie in Fig. 12a dargestellt, wird die Trägerschicht 31 mit der Prägeschicht 32 beschichtet. Anschließend wird mithilfe eines Prägewerkzeugs 39, das vorzugsweise als kontinuierlicher Prägezylinder ausgebildet ist, die Gitterstruktur 33 in die Prägeschicht 32 eingebracht. In Fig.12b ist das Halbzeug, bestehend aus Trägerfolie 31 und Prägeschicht 32, dargestellt, nachdem die Gitterstruktur 33 mit einer dünnen Schicht aus hoch brechendem Material 34 beschichtet wurde. Dieses Material wird vorzugsweise im Vakuumdampfverfahren in der gewünschten Schichtdicke auf die Gitterstruktur 33 aufgedampft. Anschließend wird die Gitterstruktur 33 mit einer Kunststoff- oder Kleberschicht 35 aufgefüllt, wie in Fig. 12c gezeigt. Bevor das Echtheitsmerkmal 36 aufgebracht wird, wird auf die Schicht 35 eine lösliche Druckfarbe 38 in den Bereichen aufgedruckt, in welchen später das Echtheitsmerkmal 36 nicht vorliegen soll. Dies ist in Fig. 12d dargestellt. Anschließend wird die Metallisierung des Echtheitsmerkmals 36 vollflächig aufgedampft.

Sofern ein Multilayer-Dünnschichtsystem verwendet wird, werden die einzelnen Schichten dieses Systems nacheinander auf die Kunststoffschicht 35 aufgedampft. Auch hier wird vorzugsweise ein Vakuumdampfverfahren verwendet. Anschließend wird die so vorbereitete Trägerschicht 31 in ein Lösungsmittel für die lösliche Druckfarbe 38 eingebracht. Hierbei handelt es sich vorzugsweise um Wasser. Bei diesem so genannten "Waschvorgang" wird die lösliche Druckfarbe 38 sowie die darüber angeordneten Bereiche des Echtheitsmerkmals 36 entfernt und es entsteht der in Fig. 11 dargestellte Sicherheitsfaden 30.

Für die Prägeschicht 32 können beliebige Kunststoffschichten, wie beispielsweise UV-härtbare Lackschichten oder thermoplastische Schichten, verwendet werden.

Auch die mithilfe des Prägewerkzeugs 39 erzeugte Prägestruktur 33 muss nicht zwangsläufig aus nur einem Nullte-Ordnung-Gitterbild bestehen. Sie kann mehrere derartiger Gitterbilder oder Kombinationen aus Nullte-Ordnung-Gitterbildern und Erste-Ordnung-Gitterbildern enthalten. So kann beispielsweise das Prägewerkzeug 29 die Gitterstruktur gemäß Fig. 4 aufweisen.

Die lösliche Druckfarbe 38 kann selbstverständlich in beliebig komplizierten und fein strukturierten Motiven aufgedruckt werden. Auf diese Weise lassen sich in der das Echtheitsmerkmal 36 bildenden Schicht Aussparungen in Form beliebiger Zeichen oder Muster erzeugen. Mit der gleichen Methode kann auch die das Echtheitsmerkmal 36 bildende Schicht in Form eines Rasters ausgeführt werden. Auch dieses Raster kann zusätzlich Aussparungen in Form von Mustern, Zeichen, Logos oder dergleichen aufweisen.

Selbstverständlich ist es auch möglich, die lösliche Druckfarbe 38 in Form eines Negativbildes aufzubringen, so dass die das Echtheitsmerkmal bildende Schicht 36 nach dem Waschprozess in Form von Zeichen, Mustern oder dergleichen vorliegt. Wird als Echtheitsmerkmal 36 eine Metallisierung verwendet, so kann diese auch in Form einer semitransparenten Metallisierung oder in Form eines Rasters aufgedampft werden.

Statt dem so genannten "Waschverfahren" können selbstverständlich auch beliebige Ätzverfahren oder andere Abtragsverfahren, wie z.B. Laserablation, zur Erzeugung strukturierter Schichten eingesetzt werden.

Fig. 13 zeigt eine weitere Ausführungsform des erfindungsgemäßen Sicherheitselements in Form eines Sicherheitsfadens 40. In diesem Fall ist auf der einen Oberfläche der Trägerschicht 31 das Nullte-Ordnung-Gitterbild, bestehend aus der Prägeschicht 32, dem hoch brechenden Material 34 sowie der Kunststoffschicht 35, angeordnet. Auf der anderen Oberfläche der Trägerschicht 31 befindet sich partiell eine Licht absorbierende Schicht 37 sowie das erfindungsgemäße Echtheitsmerkmal 36, das vollflächig auf der gesamten Oberfläche der Trägerschicht 31 angeordnet ist. In Aufsicht kann in den Bereichen, in denen der Sicherheitsfaden 40 die Licht absorbierende Schicht 37 aufweist, der optische Effekt des Nullte-Ordnung-Gitterbildes mit hoher Brillanz beobachtet werden. In Bereichen ohne Licht absorbierende Schicht 37 wird das optische Erscheinungsbild des Sicherheitsfadens 40 durch die optischen Effekte des darunter liegenden Echtheitsmerkmals 36 dominiert. Die Brillanz dieses Echtheitsmerkmals wird durch die bekannten Antireflexionseigenschaften des darüber liegenden Nullte-Ordnung-Gitterbildes erhöht.

Im Sinne der Erfindung können selbstverständlich die beispielhaft dargestellten Schichtfolgen des Sicherheitselements auch als Transfermaterial oder Etikettenmaterial verwendet werden. Ebenso ist es möglich, mehrere Echtheitsmerkmale und/oder Nullte-Ordnung-Gitterbilder auf einem Sicherheitselement vorzusehen und diese beliebig miteinander zu kombinieren.

## Patentansprüche

1. Sicherheitselement zur Absicherung von Wertgegenständen, das wenigstens einen ersten Teilbereich aufweist, in dem ein Nullte-Ordnung-Gitterbild angeordnet ist, das in einem bestimmten Spektralbereich beobachtbar ist, **dadurch gekennzeichnet, dass** das Sicherheitselement wenigstens einen zweiten Teilbereich aufweist, in dem ein weiteres Echtheitsmerkmal angeordnet ist, dass das weitere Echtheitsmerkmal ein optisch variables oder gerichtet reflektierendes Teilelement ist, und dass der erste und zweite Teilbereich über- oder nebeneinander wirksam und die Echtheits merkmale exackt zueinander positioniert sind.

2. Sicherheitselement nach Anspruch 1, **dadurch gekennzeichnet, dass** das optisch variable Teilelement ein Erste-Ordnung-Gitterbild, ein Multilayer-Dünnschichtelement oder eine Druckfarbe mit optisch variablen Bestandteilen, vorzugsweise Pigmenten, ist.

3. Sicherheitselement nach wenigstens einem der Ansprüche 1 bis 2, **dadurch gekennzeichnet, dass** die optisch variablen Bestandteile der Druckfarbe Dünnschichtpigmente oder flüssigkristalline Pigmente sind.

4. Sicherheitselement nach wenigstens einem der Ansprüche 1 bis 3, **dadurch gekennzeichnet, dass** das reflektierende Teilelement zumindest bereichsweise eine Metallisierung aufweist.

5. Sicherheitselement nach Anspruch 4, **dadurch gekennzeichnet, dass** die Metallisierung vollflächig vorliegt.

6. Sicherheitselement nach Anspruch 4, **dadurch gekennzeichnet, dass** die Metallisierung in Form eines Rasters vorliegt.

7. Sicherheitselement nach wenigstens einem der Ansprüche 1 bis 6, **dadurch gekennzeichnet, dass** die Gitterstruktur des Nullte-Ordnung-Gitterbildes eine Gitterkonstante kleiner als 500 nm, vorzugsweise kleiner 400 nm aufweist.

8. Sicherheitselement nach wenigstens einem der Ansprüche 1 bis 7, **dadurch gekennzeichnet, dass** das Nullte-Ordnung-Gitterbild wenigstens ein Bildelement aufweist, dessen Ausdehnung in wenigstens einer Richtung kleiner 1 mm, vorzugsweise kleiner 0,5 mm ist.

9. Sicherheitselement nach wenigstens einem der Ansprüche 1 bis 8, **dadurch gekennzeichnet, dass** das Nullte-Ordnung-Gitterbild wenigstens ein Bildelement aufweist, dessen Ausdehnung in wenigstens einer Richtung unterhalb des Auflösungsvermögens des Auges, vorzugsweise unterhalb 0,2 mm, liegt.

10. Sicherheitselement nach wenigstens einem der Ansprüche 1 bis 9, **dadurch gekennzeichnet, dass** das Nullte-Ordnung-Gitterbild mehrere Bildelemente aufweist, die unter einem bestimmten Betrachtungswinkel unterschiedliche Farben aufweisen.

11. Sicherheitselement nach wenigstens einem der Ansprüche 1 bis 10, **dadurch gekennzeichnet, dass** das Bildelement die Form eines Rasterelements, wie eines Punktes, Dreiecks, Linie, Zeichens etc., aufweist.

12. Sicherheitselement nach wenigstens einem der Ansprüche 1 bis 11, **dadurch gekennzeichnet, dass** das Nullte-Ordnung-Gitterbild wenigstens eine Gruppe von Bildelementen aufweist, die eine visuell erkennbare Information darstellen.

13. Sicherheitselement nach wenigstens einem der Ansprüche 1 bis 12, **dadurch gekennzeichnet, dass** der erste und/ oder zweite Teilbereich eine visuell erkennbare Information darstellen.

14. Sicherheitselement nach wenigstens einem der Ansprüche 1 bis 13, **dadurch gekennzeichnet, dass** der erste und zweite Teilbereich Teilansichten eines Gesamtbildes darstellen.

15. Gitterbild zur Absicherung von Wertgegenständen, das wenigstens ein erstes Bildelement mit einer Gitterkonstante aufweist, die kleiner ist als die Wellenlänge, bei welcher das Bildelement betrachtet wird, wobei die Gitterstruktur in diesem Bildelement in Form einer Reliefstruktur mit einer definierten Reliefhöhe vorliegt, so dass bei Betrachtung in einem bestimmten Spektralbereich ein Nullte-Ordnung-Gitterbild beobachtbar ist, **dadurch gekennzeichnet, dass** das Gitterbild wenigstens ein zweites Bildelement aufweist, in dem ein Erste-Ordnung-Gitterbild angeordnet ist, und dass das erste und zweite Bildelement über- oder nebeneinander wirksam und exacht zueinander positioniert sind.

16. Gitterbild nach Anspruch 15, **dadurch gekennzeichnet, dass** das erste und/ oder zweite Bildelement in wenigstens einer Richtung eine Ausdehnung kleiner 1 mm, vorzugsweise kleiner 0,5 mm, aufweisen.

17. Gitterbild nach Anspruch 15 oder 16, **dadurch gekennzeichnet, dass** das erste und/oder zweite Bildelement in wenigstens einer Richtung eine Ausdehnung aufweisen, die unterhalb des Auflösungsvermögens des Auges, vorzugsweise unterhalb 0,2 mm, liegt.

18. Gitterbild nach wenigstens einem der Ansprüche 15 bis 17, **dadurch gekennzeichnet, dass** das erste und/ oder zweite Bildelement die Form einer Linie aufweisen.

19. Gitterbild nach wenigstens einem der Ansprüche 15 bis 18, **dadurch gekennzeichnet, dass** das Gitterbild mehrere erste und/oder zweite Bildelemente in Form einer Linie aufweist, die unter bestimmten Betrachtungswinkeln unterschiedliche Farben aufweisen.

20. Gitterbild nach wenigstens einem der Ansprüche 15 bis 19, **dadurch gekennzeichnet, dass** das erste und/oder zweite Bildelement die Form eines Rasterelements, wie eines Punktes, Dreiecks, Zeichens etc., aufweisen.

21. Gitterbild nach wenigstens einem der Ansprüche 15 bis 20, **dadurch gekennzeichnet, dass** das Gitterbild wenigstens eine Gruppe von ersten und/ oder zweiten Bildelementen aufweist, die eine visuell erkennbare Information darstellt.

22. Transfermaterial, insbesondere Heißprägefolie mit wenigstens einem Sicherheitselement gemäß wenigstens einem der Ansprüche 1 bis 14.

23. Transfermaterial, insbesondere Heißprägefolie mit wenigstens einem Gitterbild gemäß wenigstens einem der Ansprüche 15 bis 21.

24. Sicherheitspapier mit wenigstens einem Sicherheitselement gemäß wenigstens einem der Ansprüche 1 bis 14.

25. Sicherheitspapier mit wenigstens einem Gitterbild gemäß wenigstens einem der Ansprüche 15 bis 21.

26. Sicherheitsdokument mit wenigstens einem Sicherheitselement gemäß wenigstens einem der Ansprüche 1 bis 14.

27. Sicherheitsdokument mit wenigstens einem Gitterbild gemäß wenigstens einem der Ansprüche 15 bis 21.

28. Verfahren zur Herstellung eines Sicherheitselements gemäß wenigstens einem der Ansprüche 1 bis 14, **dadurch gekennzeichnet, dass** wenigstens für die Herstellung des Nullte-Ordnung-Gitterbildes ein Elektronenstrahlverfahren verwendet wird.

29. Verfahren zur Herstellung eines Gitterbildes gemäß wenigstens einem der Ansprüche 15 bis 21, **dadurch gekennzeichnet, dass** wenigstens für die Herstellung des Nullte-Ordnung-Gitterbildes ein Elektronenstrahlverfahren verwendet wird.

30. Verfahren nach Anspruch 29, **dadurch gekennzeichnet, dass** sowohl das Nullte-Ordnung-Gitterbild als auch das Erste-Ordnung-Gitterbild im Elektronenstrahlverfahren erzeugt werden.

## Claims

1. A security element for securing objects of value, which has at least one first partial area in which there is arranged a zero-order grating image which is observable in a certain spectral range, **characterized in that** the security element has at least one second partial area in which there is arranged a further authenticity feature, that the further authenticity feature is an optically variable or directionally reflective partial element, and that the first and second partial areas are active one above or beside the other and the authenticity features are positioned exactly relative to each other.

2. The security element according to claim 1, **characterized in that** the optically variable partial element is a first-order grating image, a multilayer thin-film element or a printing ink with optically variable constituents, preferably pigments.

3. The security element according to at least one of claims 1 to 2, **characterized in that** the optically variable constituents of the printing ink are thin-film pigments or liquid-crystal pigments.

4. The security element according to at least one of claims 1 to 3, **characterized in that** the reflective partial element has a metallization at least in certain areas.

5. The security element according to claim 4, **characterized in that** the metallization is present over the entire surface.

6. The security element according to claim 4, **characterized in that** the metallization is present in the form of a grid.

7. The security element according to at least one of claims 1 to 6, **characterized in that** the grating structure of the zero-order grating image has a grating constant smaller than 500 nm, preferably smaller than 400 nm.

8. The security element according to at least one of claims 1 to 7, **characterized in that** the zero-order grating image has at least one image element whose extension in at least one direction is smaller than 1 mm, preferably smaller than 0.5 mm.

9. The security element according to at least one of claims 1 to 8, **characterized in that** the zero-order grating image has at least one image element whose extension in at least one direction is below the resolving power of the eye, preferably below 0.2 mm.

10. The security element according to at least one of claims 1 to 9, **characterized in that** the zero-order grating image has several image elements which have different colors from a certain viewing angle.

11. The security element according to at least one of claims 1 to 10, **characterized in that** the image element has the form of a grid element, such as a point, triangle, line, symbol, etc.

12. The security element according to at least one of claims 1 to 11, **characterized in that** the zero-order grating image has at least one group of image elements representing visually recognizable information.

13. The security element according to at least one of claims 1 to 12, **characterized in that** the first and/or second partial area represent visually recognizable information.

14. The security element according to at least one of claims 1 to 13, **characterized in that** the first and second partial areas represent partial views of an overall image.

15. A grating image for securing objects of value, which has at least one first image element with a grating constant which is smaller than the wavelength at which the image element is viewed, the grating structure being present in said image element in the form of a relief structure with a defined relief height, so that upon viewing in a certain spectral range a zero-order grating image is observable, **characterized in that** the grating image has at least one second image element in which a first-order grating image is arranged, and that the first and second image elements are active one above or beside the other and positioned exactly relative to each other.

16. The grating image according to claim 15, **characterized in that** the first and/or second image element have an extension in at least one direction of smaller than 1 mm, preferably smaller than 0.5 mm.

17. The grating image according to claim 15 or 16, **characterized in that** the first and/or second image element have in at least one direction an extension which is below the resolving power of the eye, preferably below 0.2 mm.

18. The grating image according to at least one of claims 15 to 17, **characterized in that** the first and/or second image element have the form of a line.

19. The grating image according to at least one of claims 15 to 18, **characterized in that** the grating image has several first and/or second image elements in the form of a line, which have different colors from certain viewing angles.

20. The grating image according to at least one of claims 15 to 19, **characterized in that** the first and/or second image element have the form of a grid element, such as a point, triangle, symbol, etc.

21. The grating image according to at least one of claims 15 to 20, **characterized in that** the grating image has at least one group of first and/or second image elements representing visually recognizable information.

22. A transfer material, in particular hot stamping foil, having at least one security element according to at least one of claims 1 to 14.

23. A transfer material, in particular hot stamping foil, having at least one grating image according to at least one of claims 15 to 21.

24. A security paper having at least one security element according to at least one of claims 1 to 14.

25. A security paper having at least one grating image according to at least one of claims 15 to 21.

26. A security document having at least one security element according to at least one of claims 1 to 14.

27. A security document having at least one grating image according to at least one of claims 15 to 21.

28. A method for producing a security element according to at least one of claims 1 to 14, **characterized in that** an electron beam process is employed at least for the production of the zero-order grating image.

29. A method for producing a grating image according to at least one of claims 15 to 21, **characterized in that** an electron beam process is employed at least for the production of the zero-order grating image.

30. The method according to claim 29, **characterized in that** both the zero-order grating image and the first-order grating image are generated by the electron beam process.

## Revendications

1. Elément de sécurité destiné à protéger des éléments de valeur, comportant au moins une première zone partielle où est disposée une image de grille d'ordre zéro observable dans une plage spectrale donnée, **caractérisé en ce que** ledit élément de sécurité comporte au moins une deuxième zone partielle où est disposée une autre caractéristique d'authenticité, **en ce que** l'autre caractéristique d'authenticité est un élément partiel optiquement variable ou à réflexion directionnelle, **en ce que** la première et la deuxième zone partielle sont opérationnelles en étant superposées ou accolées l'une à l'autre, et **en ce que** les caractéristiques d'authenticité sont positionnées avec précision l'une par rapport à l'autre.

2. Elément de sécurité selon la revendication 1, **caractérisé en ce que** l'élément partiel optiquement variable est une image de grille de premier ordre, une couche de cristaux liquides, un élément multicouches à couches minces ou une encre d'impression avec des composants optiquement variables, de préférence des pigments.

3. Elément de sécurité selon au moins une des revendications 1 et 2, **caractérisé en ce que** les composants optiquement variables de l'encre d'impression sont des pigments à couche mince ou des pigments à cristaux liquides.

4. Elément de sécurité selon au moins une des revendications 1 à 3, **caractérisé en ce que** l'élément partiel réfléchissant présente une métallisation au moins partielle.

5. Elément de sécurité selon la revendication 4, **caractérisé en ce que** la métallisation est présentée sur toute la surface.

6. Elément de sécurité selon la revendication 4, **caractérisé en ce que** la métallisation se présente sous la forme d'une trame.

7. Elément de sécurité selon au moins une des revendications 1 à 6, **caractérisé en ce que** la structure de grille de l'image de grille d'ordre zéro présente une constante de grille inférieure à 500 nm, de préférence inférieure à 400 nm.

8. Elément de sécurité selon au moins une des revendications 1 à 7, **caractérisé en ce que** l'image de grille d'ordre zéro présente au moins un élément d'image dont l'extension dans au moins une direction est inférieure à 1 mm, de préférence inférieure à 0,5 mm.

9. Elément de sécurité selon au moins une des revendications 1 à 8, **caractérisé en ce que** l'image de grille d'ordre zéro présente au moins un élément d'image dont l'extension dans au moins une direction est inférieure à la sensibilité de l'oeil, de préférence inférieure à 0,2 mm.

10. Elément de sécurité selon au moins une des revendications 1 à 9, **caractérisé en ce que** l'image de grille d'ordre zéro comporte plusieurs éléments d'image présentant des couleurs différenciées sous des angles d'observation donnés.

11. Elément de sécurité selon au moins une des revendications 1 à 10, **caractérisé en ce que** l'élément d'image présente la forme d'un élément de trame, tel que point, triangle, ligne, caractère, etc.

12. Elément de sécurité selon au moins une des revendications 1 à 11, **caractérisé en ce que** l'image de grille d'ordre zéro comporte au moins un groupe d'éléments d'image qui constituent une information visuellement identifiable.

13. Elément de sécurité selon au moins une des revendications 1 à 12, **caractérisé en ce que** la première et/ou la deuxième zone partielle constituent une information visuellement identifiable.

14. Elément de sécurité selon au moins une des revendications 1 à 13, **caractérisé en ce que** la première et la deuxième zone partielle constituent des vues partielles d'une image globale.

15. Image de grille destinée à protéger des éléments de valeur, comportant au moins un premier élément d'image avec une constante de grille inférieure à la longueur d'onde avec laquelle l'élément d'image est observé, la structure de grille dudit élément d'image étant présentée sous la forme d'une structure à relief avec une hauteur de relief définie, de manière à rendre observable une image de grille d'ordre zéro en cas d'observation dans une plage spectrale donnée, **caractérisée en ce que** l'image de grille comporte au moins un deuxième élément d'image où est disposée une image de grille de premier ordre, et **en ce que** le premier et le deuxième élément d'image sont opérationnels en étant superposés ou accolés l'un à l'autre, et positionnés avec précision l'un par rapport à l'autre

16. Image de grille selon la revendication 15, **caractérisée en ce que** le premier et/ou le deuxième élément d'image présentent, dans au moins une direction, une extension inférieure à 1 mm, de préférence inférieure à 0,5 mm.

17. Image de grille selon la revendication 15 ou la revendication 16, **caractérisée en ce que** le premier et/ou le deuxième élément d'image présentent, dans au moins une direction, une extension inférieure à la sensibilité de l'oeil, de préférence inférieure à 0,2 mm.

18. Image de grille selon au moins une des revendications 15 à 17, **caractérisée en ce que** le premier et/ou le deuxième élément d'image ont la forme d'une ligne.

19. Image de grille selon au moins une des revendications 15 à 18, **caractérisée en ce que** l'image de grille comporte plusieurs premiers et/ou deuxièmes éléments d'image sous la forme de lignes qui présentent des couleurs différenciées sous des angles d'observation donnés.

20. Image de grille selon au moins une des revendications 15 à 19, **caractérisée en ce que** le premier et/ou le deuxième élément d'image ont la forme d'un élément de trame, tel que point, triangle, ligne, caractère, etc.

21. Image de grille selon au moins une des revendications 15 à 20, **caractérisée en ce que** l'image de grille comporte au moins un groupe de premiers et/ou deuxièmes éléments d'image qui constitue une information visuellement identifiable.

22. Matériau de transfert, en particulier film de transfert thermique avec au moins un élément de sécurité selon au moins une des revendications 1 à 14.

23. Matériau de transfert, en particulier film de transfert thermique avec au moins une image de grille selon au moins une des revendications 15 à 21.

24. Papier de sécurité avec au moins un élément de sécurité selon au moins une des revendications 1 à 14.

25. Papier de sécurité avec au moins une image de grille selon au moins une des revendications 15 à 21.

26. Document de sécurité avec au moins un élément de sécurité selon au moins une des revendications 1 à 14.

27. Document de sécurité avec au moins une image de grille selon au moins une des revendications 15 à 21.

28. Procédé de fabrication d'un élément de sécurité selon au moins une des revendications 1 à 14, **caractérisé en ce qu'**il est recouru à un procédé à faisceau électronique au moins pour la fabrication de l'image de grille d'ordre zéro.

29. Procédé de fabrication d'une image de grille selon au moins une des revendications 15 à 21, **caractérisé en ce qu'**il est recouru à un procédé à faisceau électronique au moins pour la fabrication de l'image de grille d'ordre zéro.

30. Procédé selon la revendication 29, **caractérisé en ce que** l'image de grille d'ordre zéro ainsi que l'image de grille de premier ordre sont générées par procédé à faisceau électronique.
